# EUROPEAN PATENT APPLICATION

(11) **EP 4 838 772 A1**
(43) Date of publication of application: **11.11.2026**
(21) Application number: 25174336.5
(22) Date of filing: 05.05.2025
(51) Int. Cl.: H02M 1/10, H02M 7/217, H02M 7/48, H02M 7/537

(54) **POWER CONVERTER AND METHOD FOR OPERATING A POWER CONVERTER**

(71) Applicant: Infineon Technologies Austria AG, 9500 Villach (AT)
(72) Inventor: KASPER, Matthias Joachim, 9500 Villach (AT); WEIHE, Sven Elgin, 8032 Zürich (CH); HUBER, Jonas Emanuel, 5000 Aarau (CH); KOLAR, Johann Walter, 8044 Zürich (CH); DEBOY, Gerald, 9061 Klagenfurt (AT)
(74) Representative: Westphal, Mussgnug & Partner, Patentanwälte mbB

(57) **Abstract**

Disclosed is a power converter, The power converter includes: three first nodes (a, b, c), two second nodes (p, q), and one or more third nodes (d, e); a first number of four or more transformers (1a-e) each comprising a first winding (11a-e) and a second winding (12a-e) inductively coupled with the first winding (11a-e); a first circuit (2) comprising the first number of first stages (20a-e) each having a first circuit node (25a-e) and a second circuit node (26a-e), the first circuit node (25a-e) of each first stage (20a-e) connected to a first circuit node (111a-e) of the first winding (11a-e) of a respective one of the transformers (1a-e); and a second circuit (3) with a second number of second stages (30A-F) each comprising a switched node (33A-F) and each coupled to the second nodes (p, q). The second number is one more than the first number, the second windings (12a-e) are connected in series, the second stages (30A-F) are connected to the second windings (12a-e) such that each second winding (12a-e) is connected between the switched nodes (33A-F) of a respective pair of the second stages (30A-F). The first stages (20a-e) include a first group with three first stages (20a-c) and a second group with one or more first stages (20d-e), the second circuit node (26a-c) of each of the first stages (20a-c) of the first group is connected to a respective one of the first nodes (a, b, c), and the second circuit node (26d-e) of each of the one or more first stages (20a-e) of the second group is connected to a respective one of the one or more third nodes (d, e).

## Description

This disclosure relates in general to a method and a control circuit for operating a power converter, in particular a single stage three-phase PFC (Power Factor Correction) power converter.

Three-phase PFC power converters are widely used in various kinds of power conversion applications. Examples of such applications are on-board chargers (OBC) for charging a battery of a vehicle or power supplies for lighting, telecommunication, or computer server applications. A three-phase PFC power converter is configured to generate a rectified output voltage based on three alternating input voltages each received at a respective input, for example. Furthermore, in order to control a power factor, a three-phase PFC power converter is configured to control current waveforms of input currents received at the inputs such that, for example, the input currents have the same waveform as the input voltages.

The input voltages received at the inputs are grid voltages received from a power grid, for example. In many cases it is desirable to provide a galvanic isolation between the inputs where the alternating input voltages are received and an output where the rectified output voltage is provided. A conventional three-phase PFC power converter providing galvanic isolation between the input and the output may include two stages, a first stage configured to generate a rectified voltage (often referred to as a DC link voltage) based on the alternating input voltages, and a second stage configured to generate an output voltage based on the DC link voltage and to provide for a galvanic isolation between the first stage and the output. In this conventional three-phase PFC rectifier, the first stage usually includes three inductors and a DC link capacitor, and the second stage usually includes a transformer, an output capacitor and, optionally, an inductor in addition to the transformer. The inductors and the DC link capacitor are bulky and heavy and may take up to 50% of an overall size of the PFC rectifier.

There is a need for an improved three-phase PFC power converter.

One example relates to a power converter, The power converter includes three first nodes, two second nodes, and one or more third nodes; a first number of four or more transformers each comprising a first winding and a second winding inductively coupled with the first winding; a first circuit comprising the first number of first stages each having a first circuit node and a second circuit node, the first circuit node of each first stage connected to a first circuit node of the first winding of a respective one of the transformers; and a second circuit with a second number of second stages each comprising a switched node and each coupled to the second nodes. The second number is one more than the first number, the second windings are connected in series, the second stages are connected to the second windings such that each second winding is connected between the switched nodes of a respective pair of the second stages. The first stages include a first group with three first stages and a second group with one or more first stages, the second circuit node of each of the first stages of the first group is connected to a respective one of the first nodes, and the second circuit node of each of the one or more first stages of the second group is connected to a respective one of the one or more third nodes.

Examples are explained below with reference to the drawings. The drawings serve to illustrate certain principles, so that only aspects necessary for understanding these principles are illustrated. The drawings are not to scale. In the drawings the same reference characters denote like features.
Figure 1 illustrates one example of a power converter that includes a first number of first stages, a first number of transformers, and a second number of seconds stages, and a control circuit, the second number being one more than the first number;
Figures 2 and 3 show signal diagrams that illustrate one example of how the power converter may be operated;
Figure 4 shows a modification of the power converter according to Figure 1;
Figure 5 illustrates first stages according to one example;
Figure 6 illustrates second stages according to one example;
Figure 7 shows another modification of the power converter according to Figure 1;
Figures 8-10 illustrate bidirectionally blocking electronic switches according to different examples;
Figure 11 shows signal diagrams that illustrate one example of how the first stages may be operated;
Figure 12 shows signal diagrams that illustrate one example of how the second stages may be operated;
Figure 13 shows signal diagrams that illustrate one example of a method of operating the power converter; and
Figures 14-17 illustrate functional blocks of the control circuit according to one example.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

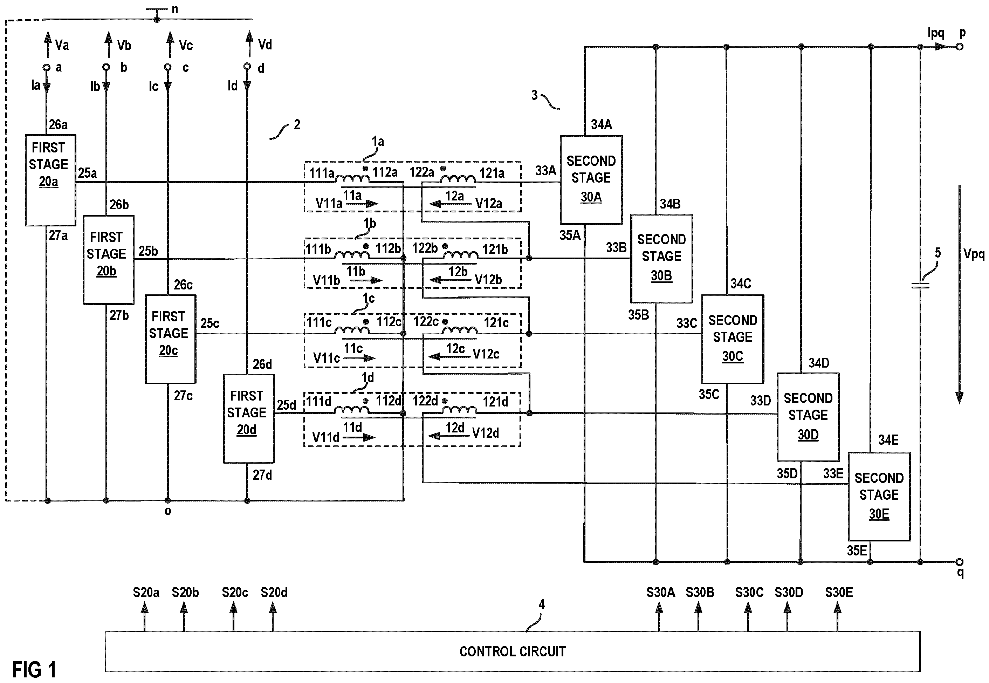

Figure 1 schematically illustrates a power converter according to one example. The power converter includes three first nodes a, b, c, two seconds nodes p, q, and one or more third nodes. In the example illustrated in Figure 1, the power converter includes one third node d. An example of a power converter with more than one third node is explained herein further below.

Referring to Figure 1, the power converter further includes a first number of four or more transformers 1a, 1b, 1c, 1d each comprising a first winding 11a, 11b, 11c, 11d and a second winding 12a, 12b, 12c, 12d inductively coupled with the first winding 11a, 11b, 11c, 11d. Each of the first windings 11a, 11b, 11c, 11d has a first circuit node 111a, 111b, 11Ic, 111d and a second circuit node 112a, 112b, 112c, 112d, and each of the second windings 12a, 12b, 12c, 12d has a first circuit node 121a, 121b, 121c, 121d and a second circuit node 122a, 122b, 122c, 122d. In the example illustrated in Figure 1, the power converter includes four transformers 1, so that the first number is four. An example of a power converter with more than four transformers is explained herein further below.

The second windings 12a, 12b, 12c, 12d of the transformers 1b, 1b, 1c, 1d are connected in series. Furthermore, in the following, voltages V12a, V12b, V12c, V12d across the second windings 12a, 12b, 12c, 12d are voltages between the first circuit node 121a, 121b, 121c, 121d and the second circuit node 122a, 122b, 122c, 122d of the respective second winding 12a, 12b, 12c, 12d.

Referring to Figure 1, the power converter further includes a first circuit 2 and a second circuit 3. The first circuit 2 includes the first number of first stages 20a, 20b, 20c, 20d each having a first circuit node 25a, 25b, 25c, 25d, a second circuit node 26a, 26b, 26c, 26d, and a third circuit node 27a, 27b, 27c. The second circuit 3 includes a second number of second stages 30A, 30B, 30C, 30D, 30E each having a switched node 33A, 33B, 33C, 33D and each coupled to a first one of the second nodes p, q via a first circuit node 34A, 34B, 34C, 34D, 34E and a second one of the second nodes p, q via a second circuit node 35A, 35B, 35C, 35D, 35E. The second number is one more than the first number. Thus, in the example illustrated in Figure 1, in which the power converter includes four transformers 1a, 1b, 1c, 1d and four first stages 2a, 2b, 2c, 2d, the power converter includes five second stages 30A, 30B, 30C, 30D, 30E.

In the following, if it is not necessary to differentiate between the individual transformers 1a, 1b, 1c, 1d, reference number 1 denotes an arbitrary one or the plurality of the transformers; reference number 11 denotes the respective first winding; reference numbers 111 and 112 denote the first and second circuit nodes of the first winding 11; reference number 12 denotes the respective second winding; and reference numbers 121, 122 denote the respective first and second circuit node of the second winding 12. Furthermore, if it is not necessary to differentiate between the individual first stages 20a, 20b, 20c, 20d, reference number 20 denotes an arbitrary one or the plurality of the first stages; reference number 25 denotes the respective first circuit node; reference number 26 denotes the respective second circuit node; and reference number 27 denotes the respective third circuit node. Furthermore, if it is not necessary to differentiate between the individual second stages 30A, 30B, 30C, 30D, 30E, reference number 30 denotes an arbitrary or the plurality of the second stages; reference number 33 denotes the respective switched node; reference number 34 denotes the respective first circuit node; and reference number 35 denotes the respective second circuit node.

Referring to Figure 1, each of the first stages 20 is associated with a respective one of the transformers 1 and has its first circuit node 25 connected to the first circuit node 111 of the primary winding 11 of the associated transformer 1. First stage 20a, for example has its first circuit node 25a connected to the first circuit node 112a of transformer 1a.

Furthermore, the second stages 13 are connected to the second windings 12 of the transformers 1 such that each of the second windings 12 is connected between the switched nodes 33 of a respective pair of the second stages 30. These pairs of second stages are mutually different, so that only one of the second windings 12 is connected between the switched nodes 33 of the same pair. For this, one of the two second stages 30 forming a pair is connected to the first circuit node 121 of the second winding 12 connected to the pair and the other one of the two stages 30 forming the pair is connected to the second circuit node 12 of the second winding 12 connected to the pair.

In the example illustrated in Figure 1, second stages 30A and 30B, for example, form one pair of the second stages and are connected to second winding 12a. For this, switched node 33A of second stage 30A is connected to the first circuit node 121a of the second winding 12a, and switched node 33B of second stage 30B is connected to the second circuit node 122a of the second winding 12a. Second stages 30B and 30C, for example, form another pair of the second stages and are connected to a second winding 12b. For this, switched node 33B of second stage 30B is connected to the first circuit node 121b of the second winding 12b, and switch node 33C of second stage 30C is connected to the second circuit node 122b of the second winding 12b.

The first stages 20a, 20b, 20c, 20d of the power converter include a first group with three stages 20a, 20b, 20c and a second group with one or more first stages 20d. The first and second group are mutually different, so that each of the first stages 20a, 20b, 20c, 20d is included in only one of the two groups. Furthermore, each of the first stages 20a, 20b, 20c, 20d is included in a respective one of the two groups so that the overall number of first stages in the two groups equals the first number of groups in the first circuit 2. In the example illustrated in Figure 1, in which the first circuit 2 includes four first stages 20a, 20b, 20c, 20d the second group includes only one first stage, which is first stage 20d in this example.

Referring to Figure 1, the second circuit node 26a, 26b, 26c of each of the first stages 20a, 20b, 20c of the first group is connected to a respective one of the first nodes a, b, c. Furthermore, the second circuit node 26d of each of the one or more first stages 20d of the second group is connected to a respective one of the one or more third nodes d. In the example illustrated in Figure 1, in which the second group includes only one first stage 20d, this includes that first stage 20d is connected to the only one third circuit node d.

According to one example, the third circuit nodes 27a, 27b, 27c of the first stages 20a, 20b, 20c of the first group are connected to a common circuit node o. Furthermore, according to one example, the second circuit nodes 112a, 112b, 112c of the primary windings 11a, 11b, 11c of the transformers 1a, 1b, 1c associated with the first stages 20a, 20b, 20c of the first group are connected to each other thereby forming a star point. The star point is connected to the common circuit node o, for example.

According to one example (as illustrated in Figure 1), the third circuit node 27d of the first stage 20d of the second group is connected to the common circuit node o, and the second circuit node 112d of the primary winding 11d of the transformer 1d associated with the first stage 20d of the second group is connected to the star point formed by the second windings 112a, 112b, 112c of the primary windings 11a, 11b, 11c.

Referring to Figure 1, the power converter further includes a control circuit (controller) 4. The control circuit 4 is configured to control operation of the first stages 20a, 20b, 20c, 20d and the second stages 30A, 30B, 30C, 30D, 30E of the power converter. In Figure 1, each of reference signs S20a, S20b, S20c, S20d represents one or more control signals for controlling a respective one of the first stages 20a, 20b, 20c, 20d, and each of reference signs S30A, S30B, S30C, S30D, S30E represents one or more control signals for controlling a respective one of the second stages 30A, 30B, 30C, 30D, 30E.

Referring to Figure 1, the power converter may further include a capacitor 5 connected between the second nodes p, q of the power converter.

According to one example, the first nodes a, b, c are configured to be connected to a power grid, such as a three-phase power grid or a single-phase power grid. If the power grid is a three-phase power grid, different voltages Va, Vb, Vc are received at the first nodes a, b, c. If the power grid is a single-phase power grid, the same voltage is received at each of the three first nodes a, b, c.

According to one example, the power grid has a reference node n, and the voltages Va, Vb, Vc are referenced to a reference node n. According to one example illustrated in dashed lines in Figure 1, the common circuit node o is connected to the reference node n of the power grid.

The power converter illustrated in Figure 1 can be operated bidirectionally. That is, the power converter can be operated in a first operating mode or a second operating mode.

In the first operating mode, a power flow in the power converter is from the first nodes a, b, c to the second nodes p, q. In this operating mode, voltages Va, Vb, Vc and currents Ia, Ib, Ic are received at the first nodes a, b, c and a current Ipq and a voltage Vpq are provided at the second nodes p, q. In this operating mode, the first nodes a, b, c are input nodes of the power converter; the second nodes p, q are output nodes of the power converter; the voltages Va, Vb, Vc received at the first nodes a, b, c are input voltages; the currents Ia, Ib, Ic received at the first nodes a, b, c are input currents; the voltage Vpq at the second nodes p, q is an output voltage; and the current Ipq at the second nodes p, q is an output current.

In the first operating mode, the power converter may be configured to receive alternating input voltages Va, Vb, Vc at the first nodes a, b, c, regulate one of the output current Ipq and the output voltage Vpq for supplying a load, and regulate current waveforms of the input currents Ia, Ib, Ic in order to control a power factor and operate as a PFC (power factor correction) rectifier.

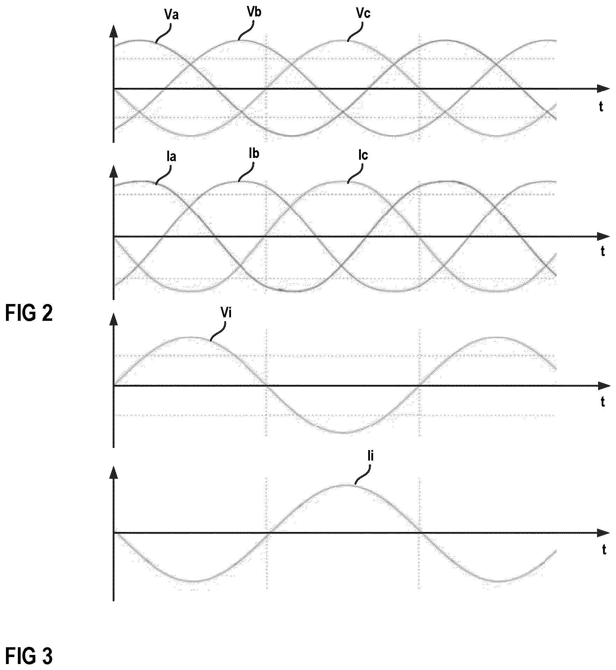

Figure 2 schematically illustrates signal diagrams of alternating voltages Va, Vb, Vc the power converter may receive at the primary side nodes a, b, c when the power converter is in the first operating mode and operates as a PFC rectifier. According to one example, as illustrated in Figure 2, the voltages Va, Vb, Vc received at the first nodes a, b, c are sinusoidal voltages, such as sinusoidal voltages provided by a three-phase power grid.

Referring to Figure 2, there is a phase shift between each pair of these voltages Va, Vb, Vc, wherein the phase shift is 120° (2π(/3), for example. A frequency of the voltages Va, Vb, Vc, which is the reciprocal of the duration of one period, is 50 Hz or 60 Hz, for example. An RMS (root mean square) value of the input voltages Va, Vb, Vc is 230 V_{RMS} or 110 V_{RMS}, for example (wherein the three input voltages Va, Vb, Vc have the same RMS value). The amplitude of each of the input voltages Va, Vb, Vc is $\sqrt{2}$ times the RMS value.

When the power converter operates as a PFC rectifier, the currents Ia, Ib, Ic received at the primary side nodes a, b, c are adjusted to essentially have the same signal waveforms as the voltages Va, Vb, Vc in order to control a power factor of power received at the first nodes a, b, c. The voltages Va, Vb, Vc and the currents Ia, Ib, Ic received at the first side nodes a, b, c may be in phase, so that each input current Ia, Ib, Ic is essentially proportional to the respective input voltage Va, Vb, Vc. It should be noted that due to a switched mode operation of the primary side stages 2a, 2b, 2c explained in the following, the currents Ia, Ib, Ic may include current ripples. Thus, "the currents Ia, Ib, Ic essentially having the same signal waveforms as the input voltages Va, Vb, Vc" relates to signal waveforms of the average currents Ia, Ib, Ic, wherein the average relates to the average over time periods that include one or more drive cycles of the switched mode operation of the primary side stages 20a, 20b, 20c of the first group.

In the first operating mode of the power converter, the output current Ipq is a direct current and the output voltage Vpq is a direct voltage, for example. Any type of load configured to receive a direct voltage and a direct current may be connected to the second nodes p, q in the first operating mode. According to one example, the load is a battery, such as a vehicle battery. In this example, the output voltage Vpq is defined by the battery and the power converter may be configured to regulate the output current Ipq or an output power, which is given by the output current Ipq multiplied with the output voltage Vpq.

In the second operating mode, a power flow in the power converter is from the second nodes p, q to the first nodes a, b, c. In this operating mode, a voltage Vpq and a current Ipq are received from a DC (direct current) power source at the second nodes p, q, for example, and currents Ia, Ib, Ic are provided at the first nodes a, b, c. The DC power source is a battery, for example.

In the second operating mode, the second nodes p, q are input nodes, the first nodes a, b, c are output nodes, the voltage Vpq received at the second nodes p, q is an input voltage, the current Ipq received at the second nodes p, q is an input current, and the currents Ia, Ib, Ic provided at the first nodes a, b, c are output currents. In the second operating mode, the power converter may be configured to drive the currents Ia, Ib, Ic into a power grid. In this example, voltages Va, Vb, Vc between the first nodes a, b, c and the reference node n may be defined by the power grid.

According to another example, in the second operating mode, the power converter is also configured to define the signal waveforms of the voltages Va, Vb, Vc between the first nodes a, b, c and the reference node n. This type of operating mode may be referred to as islanded mode.

In each of the first operating mode and the second operating mode, the power converter, controlled by the control circuit 4, is configured to provide a respective supply voltage Vd and a respective supply current Id at each of the one or more third nodes d to a load (not illustrated in Figure 1) connected to the respective third node. The supply voltage Vd is an alternating voltage, for example. An amplitude and frequency of the alternating voltage is independent of a frequency and an amplitude of grid voltages Va, Vb, Vc received at the first nodes a, b, c, for example.

According to one example illustrated in Figures 3, the supply voltage Vd provided by the power converter at the third node d illustrated in Figure 1 is a sinusoidal voltage. Referring to the above, the frequency of this sinusoidal voltage can be adjusted independent of the frequency of grid voltages Va, Vb, Vc received at the first nodes a, b, c.

Figure 3 illustrates an operating scenario in which an ohmic load is connected to the third node d, so that the current Id at the third node d is essentially proportional to the voltage Vd and flows in a direction opposite the direction shown in the drawings.

According to another example, the voltage Vd at the third node d is not defined by the power converter but is defined by a single phase power grid. In this example, the power converter supplies power to the single phase power grid via the third node d and may act as a PFC converter.

In each case, the power provided to the third node d by the power converter can be received from the first nodes a, b, c when the power converter is in the first operating mode, or can be provided by a battery connected to the second nodes p, q when the power converter is in the second operating mode. In the second operating mode, the power converter may provide power to an arbitrary combination of the first and third nodes a, b, c, d. That is, the power converter may provide power (a) to the first nodes a, b, c and the at least one third node d, (b) only to the first nodes a, b, c, (c) only to the at least one third node (d), or to one or more of the first nodes a, b, c and, optionally, to the at least one third node d.

According to another example, the supply voltage Vd provided by the power converter at the third node d is a direct voltage.

The power converter according to Figure 1, in the first operating mode, enables a battery, such as a vehicle battery, connected to the second nodes p, q to be charged from a power grid and, at the same time, enables a load different from the battery to be supplied by the supply voltage Vd provided at the third node d. In the first operating mode, the power required to generate the supply voltage Vd and the supply current Id is provided from the three first nodes a, b, c. In the second operating mode, the power converter enables power to be provided to the first nodes a, b, c and, at the same time, enables a load to be supplied by the supply voltage Vd provided at the third node d. In the second operating mode, the power required to generate the supply voltage Vd and the supply current Id is provided from the DC power source connected to the second nodes p, q. In each case the supply voltage Vd, e.g., with regard to frequency and amplitude, can be adapted to the requirements of the load that is to be supplied.

In the power converter according to Figure 1, the supply voltage Vd provided at the third node d is referenced to the reference node n of the power grid. For this, the third circuit node 27d of the first stage 20d of the second group is connected to the common circuit node o of the power converter, wherein the common circuit node o of the power converter is connected to the reference node of the power grid. Implementing the power converter in this way, however, is only an example.

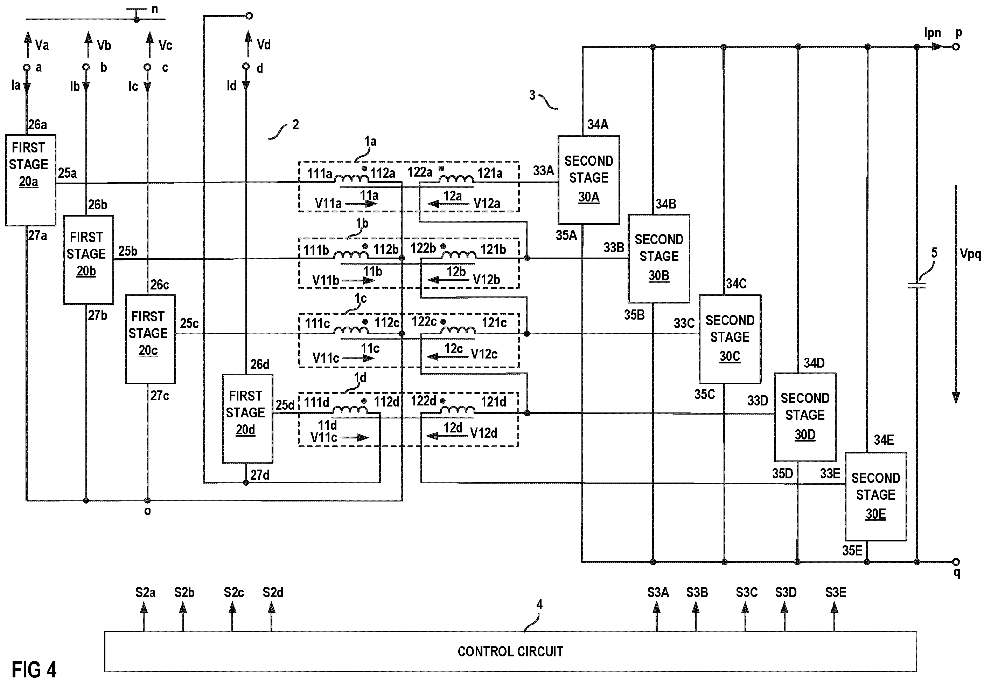

According to another example illustrated in Figure 4, the supply voltage Vd provided at the third node d is isolated from the power grid. In this example, the third circuit node 27d of the first stage 20d of the second group is not connected to the common circuit node o, and the second circuit node 112d of the first winding 11d of the transformer 1d associated with the first stage 20d is not connected to the star point. Instead, the third circuit node 27d of the first stage 20d is connected to the second circuit node 112d of the first winding 11d of the transformer 1d associated with the first stage 20d. In this example, the supply voltage Vd provided at the third node d is referenced to the third circuit node 27d of the first stage 20d and the second circuit node 112d of the first winding 11d of the transformer 1d associated with the first stage 20d.

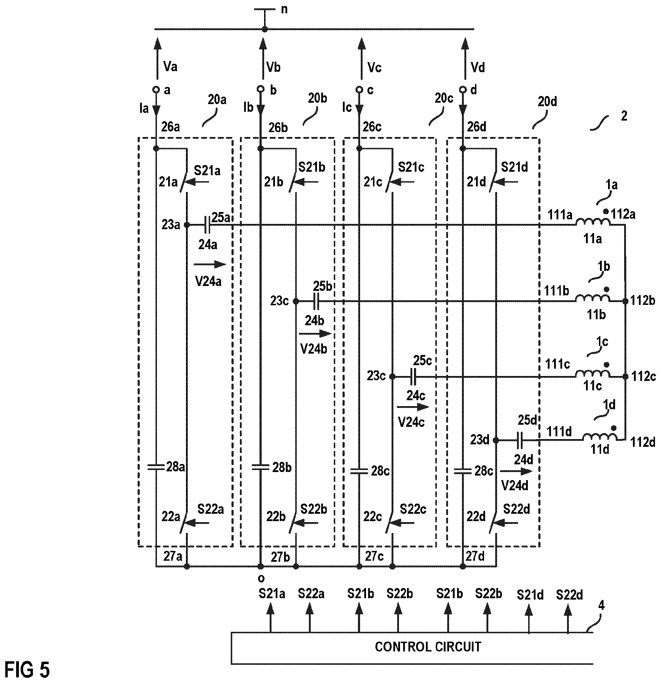

One example of how the first stages 20 may be implemented is illustrated in Figure 5. In this example each first side stage 20 includes a switch half-bridge with a first switch 21 (reference number 21 representing an arbitrary one or the plurality of the first switches 21a, 21b, 21c, 21d illustrated in Figure 5) and a second switch 22 (reference number 22 representing an arbitrary one or the plurality of the second switches 22a, 22b, 22c, 22d illustrated in Figure 5). The first switch 21 and the second switch 22 are connected to each other at a respective switched node 23 (reference number 23 representing an arbitrary one or the plurality of the switched nodes 23a, 23b, 23c, 23d illustrated in Figure 5) and are connected in series between the second circuit node 26 and the third circuit node 27 of the respective first stage 20.

The switched node 23 of each of the first stages 20 is coupled to the first winding 11 of a respective one of the transformers 1. More specifically, the switched node 23 of each of the first stages 20 is coupled to the first circuit node 111 of the first winding 11 of a respective one of the transformers 1. For coupling the switched node 23 to the respective first winding 11 each of the first stages 20 includes a respective capacitor 24 (reference number 24 representing an arbitrary one or the plurality of the capacitors 24a, 24b, 24c, 24d illustrated in Figure 5) connected between the switched node 23 and the first circuit node 111 of the respective first winding 11. More specifically, the capacitor 24 is connected between the switched node 23 and the first circuit node 25 of the respective first stage 20, wherein the first circuit node 25 of the first stage 20, as explained above, is connected to the first circuit node 111 of the first winding 11.

Just for the purpose of illustration, in the example illustrated in Figure 5, the second circuit nodes 112d of the first winding 11d of the transformer 1d associated with the first stage 21d of the second group is connected to the start point of the first windings 11a, 11b, 11c of the transformers 1a, 1b, 1c associated with the first stages 21a, 21b, 21c of the first group. This, however, is only an example. As explained with reference to Figure 4, it is also possible to implement the power converter in such a way that the first winding 11d of the transformer 1d associated with the first stage 21d of the second group is connected to the third circuit node 27d of the first stage 21d, the third circuit node 27d being isolated from the common circuit node o, and the first winding 11d being isolated from the star point.

Referring to Figure 5, each of the first stages 20 may further include a further capacitor 28 (reference number 28 representing an arbitrary one or the plurality of the further capacitors 28a, 28b, 28c, 28d illustrated in Figure 5). The further capacitor 28 is connected between the second and third circuit nodes 26, 27 of the respective first stage 20 and is thus connected in parallel with the respective half-bridge including the first switch 21 and the second switch 22.

The first switch 21 of each first stage 20 receives a respective first control signal S21 (reference sign S21 representing an arbitrary one or the plurality of first control signals S21a, S21b, S21c, S21d illustrated in Figure 5), and the second switch 22 of each first stage 20 receives a respective second control signal S22 (reference sign S22 representing an arbitrary one or the plurality of first control signals S22a, S22b, S22c, S22d illustrated in Figure 5). The first and second control signals S21, S22 are provided by the control circuit 4 and are configured to switch on or off the respective first or second switch 21, 22. One example of how the first stages 20 with the switch half-bridges may be operated by the control circuit 4 is explained herein below with reference to Fig-ure 11.

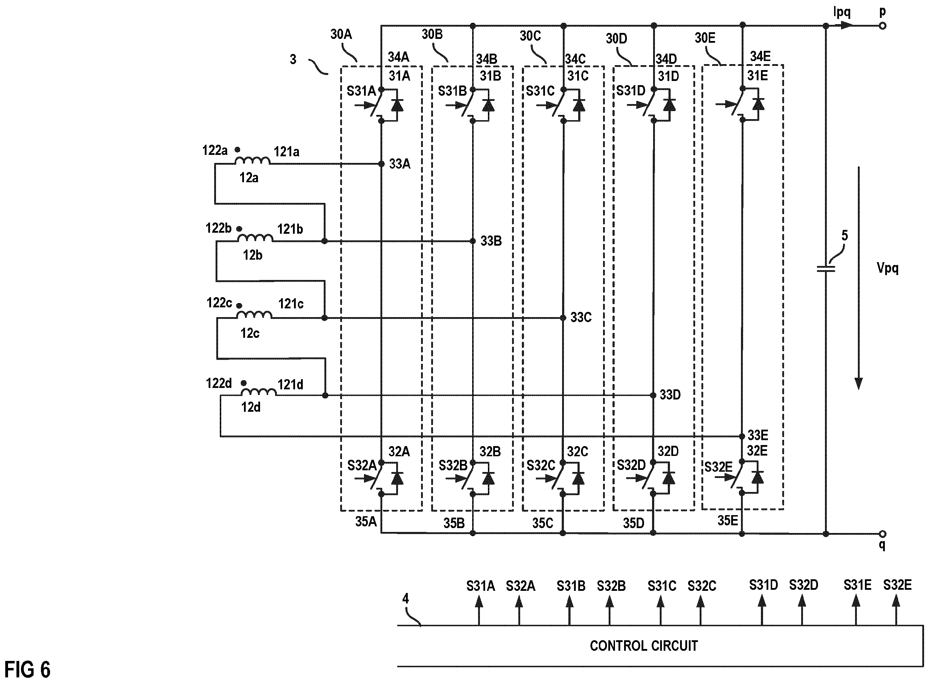

One example of how the second stages 30 may be implemented is illustrated in Figure 6. In this example, each of the second stages 30 includes a switch half-bridge with a first switch 31 (reference number 31 representing an arbitrary one or the plurality of the first switches 31A, 31B, 31C, 31D, 31E illustrated in Figure 6) and a second switch 32 (reference number 32 representing an arbitrary one or the plurality of the second switches 32A, 32B, 32C, 32D, 32E illustrated in Figure 6). The first and second switches 31, 32 of each second stage 30 are connected to each other at the switched node 33 of the respective second stage 30 and are connected in series between the first circuit node 34 and the second circuit node 35 of the respective second stage 30.

The first switch 31 of each second stage 30 receives a first control signal S31 (reference sign S31 representing an arbitrary one or the plurality of the first control signals S31A, S31B, S31C, S31D, S31E illustrated in Figure 6), and the second switch 32 of each second stage 30 receives a second control signal S32 (reference sign S32 representing an arbitrary one or the plurality of the second control signals S32A, S32B, S32C, S32D, S32E). The first and second control signals S31, S32 are provided by the control circuit 4 and are configured to switch on or off the respective first or second switch 31, 32. One example of how the second stages 30 with the switch half-bridges may be operated by the control circuit 4 is explained herein further below.

As explained before, the power converter includes at least one third node which is configured to provide a supply voltage and a supply current to a load. In the examples explained herein before, the power converter includes one third node d, so as to be configured to provide one supply voltage Vd and a corresponding supply current Id. The power converter, however, is not restricted to include only one third node but can also be implemented to include two or more third nodes each configured to provide a supply voltage and a corresponding supply current to a respective load. The supply voltages provided at the third nodes can be generated independently and can have different frequencies and amplitudes. The frequency and amplitude of one or more of the supply voltages can be zero so that the respective supply voltage is a direct voltage.

For each additional third node, the power converter includes an additional transformer; an additional first stage coupled to the additional third node and the first winding of the additional transformer; and an additional second stage. Thus, in each case, the first number of the transformers and the first stages is given by the overall number of first and third nodes, and the second number of the second stages is one more than the first number.

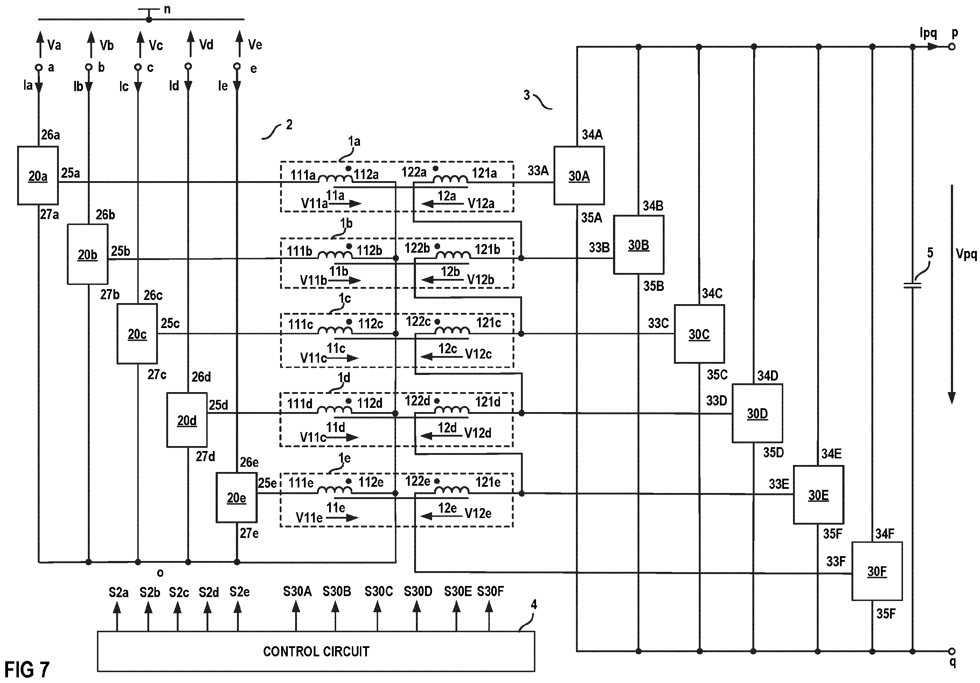

For illustration purposes, Figure 7 illustrates one example of a power converter that includes two third nodes d, e. The power converter illustrated in Figure 7 is based on the power converter illustrated in Figure 1 and additionally includes a further third node e, a further first stage 20e, a further transformer 1e, and a further second stage 30F. The further first stage 20e may be implemented in the same way as the other first stages 20a, 20b, 20c, 20d illustrated in Figure 5, and the further second stage 30F may be implemented in the same way as the other second stages 30A, 30B, 30C, 30D, 30E illustrated in Figure 6.

Similar to the other transformers 1a, 1b, 1c, 1d, the further transformer 1e includes a first winding 11e with a first circuit node 111e and a second circuit node 112e and a second winding 12e with a first circuit node 121e and a second circuit node 122e. Similar to the other first stages 20a, 20b, 20c, 20d, the further first stage 20e includes a first circuit node 25e, a second circuit node 26e and a third circuit node 27e.

Similar to how the other first stages 20a, 20b, 20c, 20d and the other transformers 1a, 1b, 1c, 1d are connected with each other, the first circuit node 25e of the further first stage 20e is connected to the first circuit node 111e of the first winding 11e of the further transformer 1e. Furthermore, the second circuit node 26e of the further first stage 1e is connected to the further third node e. Furthermore, the second winding 12e of the further transformer 1e is connected between the switched nodes 33E of second state stage 30E and a switched node 33F of the further second stage 30F.

In the example illustrated in Figure 7, the third circuit nodes 27d, 27e of the first stages 20d, 20e of the second group are connected to the common circuit node o, and the second circuit nodes 112d, 112e of the first windings 11d, 11e of the transformers 1d, 1e associated with the first stages 20d, 20e are connected to the start point of the first windings 11a, 11b, 11c of the transformers 1a, 1b, 1c associated with the first stages 20a, 20b, 20c of the first group. Thus, the supply voltages Vd, Ve available at both third nodes d, e are referenced to the reference node n.

This, however, is only an example. Basically, the power converter can be implemented such that (a) each of the supply voltages available at two or more third nodes are referenced to the reference node n, (b) each of the supply voltages available at two or more third nodes are isolated from the reference node n, or (c) one or more of the supply voltages available at two or more third nodes are referenced to the reference node n and one or more others of the supply voltages available at the two or more third nodes are isolated from the reference node. As explained herein before, an isolated supply voltage at a certain third node can be generated by connecting the third circuit node of the first stage connected to the certain third node to the second circuit node of the second winding of the transformer associated with the first stage and by not connecting the second circuit node of the second winding of the transformer to the start point of the transformers 1a, 1b, 1c.

Referring to Figure 7, the further first stage 20e and the further stage 30F are controlled by the control circuit 4. In Figure 7, reference signs S2e, S30F represent control signals for controlling the further first stage 20e and the further second stage 30F by the control circuit 4.

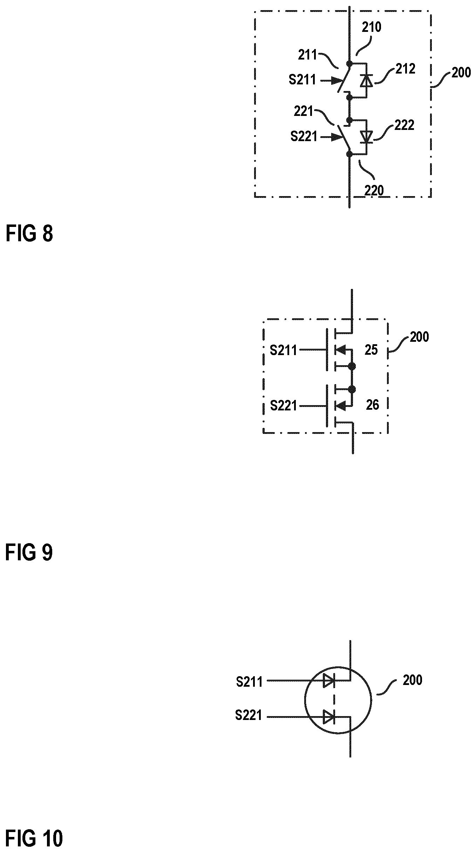

According to one example, the first and second switches 21, 22 of the first stages 20 are bidirectionally blocking electronic switches. A "bidirectionally blocking electronic switch" is an electronic switch that, in the off-state, is configured to block independent of a polarity of a voltage applied across the electronic switch. A bidirectionally blocking electronic switch may be implemented in various ways. Examples are explained with reference to Figures 8-10 in the following. In these figures, reference number 200 denotes an arbitrary one of the first and second electronic switches 21, 22 in the first stages 20.

According to Figure 8, the bidirectionally blocking switch 200 may include two unidirectionally blocking electronic switches 210, 220 connected in series. These unidirectionally blocking electronic switches 210, 220 may be referred to as partial switches. A "unidirectionally blocking electronic switch" is an electronic switch that, in the off-state, is configured to block when a voltage applied across the switch has a first polarity and to conduct when the voltage has a second polarity opposite the first polarity. A unidirectionally blocking electronic switch can be considered to include a switching element 211, 221 and a freewheeling element 212, 222, such as a diode, connected in parallel with the switching element 211, 221. In the off-state, the switching element 211, 221 blocks independent of the polarity of the voltage across the electronic switch 210, 220, while the freewheeling element 212, 222 blocks when the voltage has the first polarity and conducts when the voltage has the second polarity.

The unidirectionally blocking electronic switches 210, 220 may be implemented in various ways. Basically, any type of electronic switching element and any type of rectifier element connected in parallel with the switching element may be used to implement one unidirectionally blocking electronic switch.

A MOSFET, for example, is a unidirectionally blocking electronic switch. Thus, as illustrated in Figure 9, the bidirectionally blocking electronic switch 200 may include two MOSFETs (Metal Oxide Semiconductor Field-Effect Transistors) that are connected in series such that internal body diodes of the MOSFETs are connected in anti-series. The body diode of a MOSFET acts as a freewheeling element and makes the MOSFET a unidirectionally blocking electronic switch.

According to another example illustrated in Figure 10, the bidirectionally blocking electronic switch 200 is a bidirectionally blocking gallium nitride (GaN) switch. Such bidirectionally blocking GaN switch includes two GaN HEMTs (High Electron-Mobility Transistors) as partial switches that are connected in series in such a way that internal freewheeling elements are connected in anti-series. According to one example, the two GaN HEMTs are two single GaN HEMTs connected in series. According to another example, the two GaN HEMTs are monolithically integrated and each have a control node but share the same active area. Thus, a monolithic bidirectionally blocking GaN HEMT has the benefit of using the same active area (instead of two different active areas in the case of two single GaN HEMT is connected in series), which results in a reduced on-resistance, which is the electrical resistance in the on-state.

In each case, the bidirectionally blocking electronic switch 20 is configured to receive two drive signals S211, S221. That is, the bidirectionally blocking electronic switch is configured to receive a respective drive signal S211, S221 for each of the two partial switches. The bidirectionally blocking switch 200 is in the off-state when each of the partial switches is in the off-state and is in the on-state when each of the partial switches is in the on-state. In the off-state, the bidirectionally blocking switch blocks independent of the polarity of the voltage applied across the switch. In the on-state, the bidirectionally blocking switch conducts independent of the polarity of the voltage applied across the switch. Each of the two drive signals S211, S221 received by one bidirectionally blocking electronic switch essentially equals the respective drive signal S21, S22 explained herein before, wherein during switch-over between the on-state and the off-state of the bidirectionally blocking switch there may be a short time period in which one of the partial switches is already blocking while the other one of the partial switches is still conducting. This is well known in the context of operating a bidirectionally blocking switch. Thus, no further explanation is required in this regard.

The electronic switches 31, 32 of the second stages 30 are unidirectionally blocking electronic switches, for example. In the drawings, this is represented by each of the first and second switches 31, 32 having a switching element and a rectifier element connected in parallel. Just for the purpose of illustration, the rectifier elements of the unidirectionally blocking electronic switches 31, 32 are illustrated as diodes in the examples. According to one example, the first and second switches 31, 32 of the second stages 30 are MOSFETs.

According to one example, the first and second switches 31, 32 of a second stage 30 are connected between the switched node 33 and the second nodes p, q such that freewheeling element (rectifier element) of the first switch 31 is conducting when the electrical potential at the switched node 33 is higher than the electrical potential at the first one p of the second nodes p, q and the freewheeling element (rectifier element) of the second switch 32 is conducting when the electrical potential at the switched node 33 is lower than the electrical potential at the other one q of the second nodes.

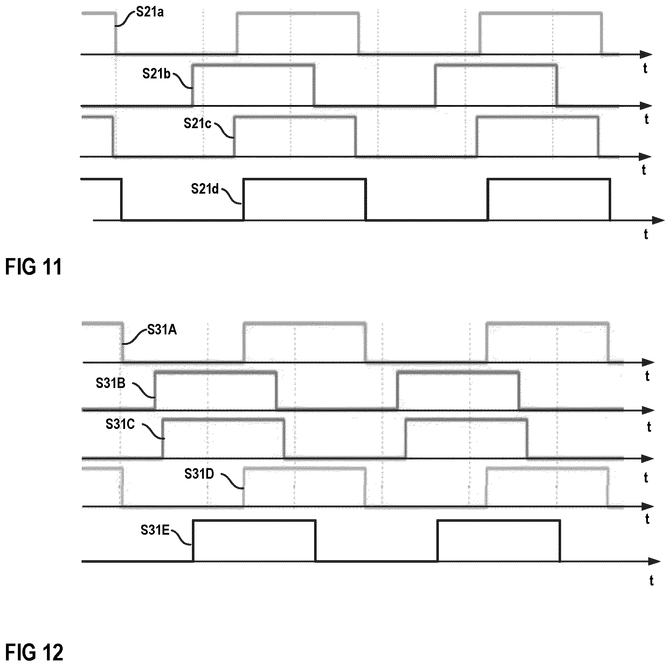

Figures 11 and 12 show signal diagrams that illustrate one example of a method for operating a power converter of the type explained herein before. More specifically, Figure 11 shows signal diagrams that illustrate one example of a method for operating the first stages 20, and Figure 12 shows signal diagrams that illustrate one example of a method for operating the second stages 30. Just for the purpose of illustration, the signal diagrams shown in Figures 11 and 12 relate to a power converter with four first stages 20 and five second stages 30.

Figure 11, shows signal diagrams of the control signals S21a, S21b, S21c, S21d of the first switches 21a, 21b, 21c, 21d of the first stages 20a, 20b, 20c, 20d over the duration of several drive cycles of operating the first stages 20a, 20b, 20c, 20d. Signal diagrams of the control signals S22a, S22b, S22c, S22d of the second switches 22a, 22b, 22c, 22d are not illustrated. The second switch 22 in each first stage 20 is operated complementarily to the first switch 21, so that the second switch 22 is in the off-state when the first switch 21 is in the on-state and the second switch 22 is in the on-state when the first switch 21 is in the off-state. Thus, each time only one of the first and second switches 21, 22 of a respective first stage 20 is in the on-state.

Figure 12 shows signal diagrams of the control signals S31A, S31B, S31C, S31D, S31E of the first switches 31A, 31B, 31C, 31D, 31E of the second stages 30A, 30B, 30C, 30D, 30E over the duration of several drive cycles of operating the second stages 30A, 30B, 30C, 30D, 30E. Signal diagrams of the control signals S32A, S32B, S32C, S32D, S32E of the second switches 32A, 32B, 32C, 32D, 32E are not illustrated. The second switch 32 in each second stage 30 is operated complementarily to the first switch 31, so that the second switch 32 is in the off-state when the first switch 31 is in the on-state, and vice versa. Thus, each time only one of the first and second switches 31, 32 of a respective second stage 30 is in the on-state.

Each of the control signals (drive signals) S21 illustrated in Figure 11 (reference sign S21 representing an arbitrary one or the plurality of the control signals S21a, S21b, S21c, S21d shown in Figure 11) and each of the control signals S31 illustrated in Figure 12 (reference sign S31 representing an arbitrary one or the plurality of the control signals S31A, S31B, S31C, S31D, S31E shown in Figure 12) can have an on-level that switches on the respective switch 21, 31 or an off-level that switches off the respective switch 21, 31. According to one example, high signal levels of the control signals S21, S31 shown in Figures 11 and 12 are on levels and low signal levels are off levels.

According to one example, the first stages 20 and the second stages 30 are operated at the same frequency. The frequency of operating a respective first stage 20 is the reciprocal of the duration of one drive cycle of operating the first stage 20. Each drive cycle includes an on-time, which is the time period in which the first switch 21 is in the on-state and the second switch 22 is in the off-state, and an off-time, which is the time period in which the first switch 21 is in the off-state and the second switch 22 is in the on-state. Similarly, the frequency of operating a respective second stage 30 is the reciprocal of the duration of one drive cycle of operating the first stage 30. Each drive cycle includes a first half-cycle, which is the time period in which the first switch 31 is in the on-state and the second switch 32 is in the off-state, and a second half-cycle, which is the time period in which the first switch 31 is in the off-state and the second switch 32 is in the on-state.

Furthermore, according to one example, the first and second stages 20, 30 are operated at a duty cycle of at least approximately 50%. This includes that the first and second switches 21, 22 in each first stage 20 are in the on-state for at least approximately the same time durations in each drive cycle and that the first and second switches 31, 32 in each second stage 30 are in the on-state for at least approximately the same time durations in each drive cycle.

Actually, the duty cycle of operating the first and second switches 21, 22 in each first stage 20 may be slightly less than 50%, such as between 49% and 50%, as there may be a dead time between switching off one of the first and second switches 21, 22 and switching on the other one of the first and second switches 21, 22. During the dead time, each of the first and second switches 21, 22 is in the off-state in order to avoid a cross current. This dead time, however, is much shorter than the duration of one drive cycle and is less than 1% of the duration of one drive cycle. Similarly, the duty cycle of operating the first and second switches 31, 32 may be slightly less than 50%, such as between 49% and 50%.

According to one example, the switching frequency of operating the first and second stages 20, 30 is selected from a range of between 10 kHz and 1 MHz, in particular between 50 kHz and 300 kHz.

Operating the first stages 20 such that the first and second switches 21, 22 are alternatingly and complementarily operated in the on-state and the off-state is referred to as switched- mode operation of the first stages 20 in the following. Similarly, operating the second stages 30 such that the first and second switches 31, 32 are alternatingly and complementarily operated in the on-state in the off-state is referred to as switched-mode operation of the second stages 30 in the following.

Operating the power converter such that the first stages 20 and the second stages 30 are each operated at a duty cycle of essentially 50% has the advantage that the switches 21, 22 in the first stages 20 and the switches 31, 32 in the second stages 30 are subjected to approximately the same electrical stress over the time.

The method explained in the following can be applied to a power converter of the type explained herein before which includes at least one third node d, a corresponding first stage 20d connected to the third node d, a corresponding transformer 1d, and a corresponding second stage 30E. The method, however, can also be applied to a power converter that includes the three first nodes a, b, c, the two seconds nodes p, q, the corresponding first stages 20a, 20b, 20c and the corresponding second stages 30A, 30B, 30C, 30D and that is devoid of the at least one third node d. At first, a method for operating a power converter that is devoid of the at least one third node d is explained. As will be seen, this method can easily be extended to a power converter of the type explained herein before that includes the at least one third node d.

When operating the power converter in the way illustrated in Figure 11, alternating voltages are generated across the first windings 11 of the transformers 1. That is, each of the voltages V11 across the first windings 11 (where V11 denotes an arbitrary one or the plurality of the voltages V11a, V11b, V11c, V11d, V11e) is an alternating voltage. For 50% of the duration of one drive cycle, the alternating voltage has a voltage level that is equal to 50% of the instantaneous voltage level of the voltage Va, Vb, Vc, Vd, Ve at the respective first and third nodes a, b, c, d, e, and for another 50% of the drive cycle, the alternating voltage has a voltage level that is equal to 50% of the negated instantaneous voltage level of the voltage Va, Vb, Vc, Vd, Ve at the respective first and second nodes a, b, c, d, e. If, for example, the voltages Va, Vb, Vc, Vd, Ve at the first and second nodes a, b, c, d, e are sinusoidal voltages, the instantaneous voltage levels vary over the time.

That a magnitude of the voltage level of the voltage V11 across the first windings 11 is 50% of the magnitude of the voltage level of the respective voltage at the first and third nodes a, b, c, d, e is due to the topology of the first stages 20 illustrated in Fig-ure 5. This, however, is only an example. Other topologies of the first stage 20 resulting in alternating voltages at the first windings that change between the voltage level and the negated (inverted) voltage level of the voltage at the respective first or third node a, b, c, d, e may be used as well.

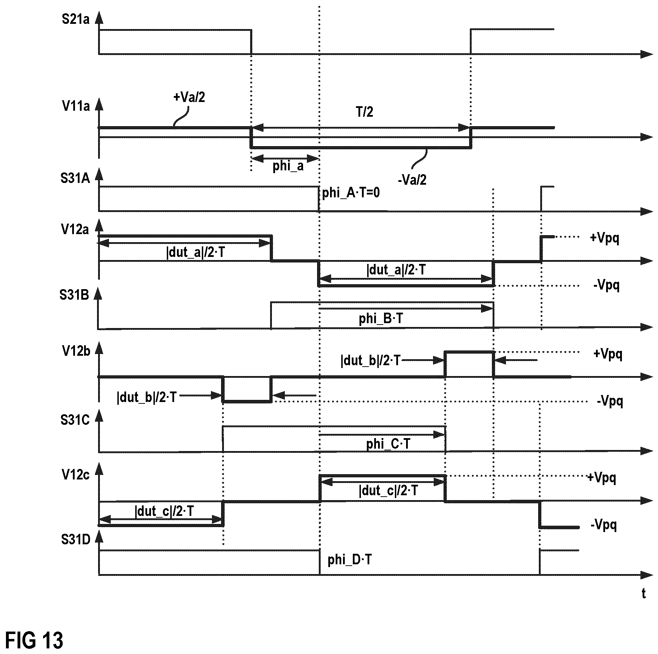

For the purpose of illustration, Figures 13 shows a signal diagram of the voltage V11a across the first winding 11a of transformer 1a and the corresponding control signal S21a of the first switch 21a in the first stage 20a connected to the first winding 11a. As can be seen from Figure 13, the voltage level of the voltage V11a alternates between 50% of the instantaneous voltage level +Va of the voltage Va at first node a and 50% of the negated (inverted) instantaneous voltage level -Va of the voltage Va at first node a. Just for the purpose of illustration, the instantaneous voltage level +Va in the example illustrated in Figure 13 is positive. As the voltage Va is a sinusoidal voltage, for example, the voltage level +V is either positive or negative, so that the negated voltage level -Va is either negative or positive.

Referring to Figure 13, the voltage level of the voltage V11a across the first winding 11a is +Va/2 when the first switch 21a is in the on-state (and the second switch 22a is in the off-state) and -Va/2 when the first switch 21a is in the off-state (and the second switch 22a is in the on-state).

In the power converter, the power transfer from the first side to the second side, or vice versa, is adjusted by adjusting the voltages V12 across the second windings 12 (where V12 denotes an arbitrary one or the plurality of the voltages V12a, V12b, V12c, V12d, V12e). The voltage V12 across each second winding can have three different voltage levels, (a) the voltage level +Vpq of the voltage Vpq at the second nodes p, q, which is when the second stage 30 connected to the first circuit node 121 of the second winding 12 connects the first circuit node 121 to the first one p of the second nodes p, q and the second stage 30 connected to the second circuit node 122 of the second winding 12 connects the second circuit node 122 to the second one q of the second nodes p, q; (b) zero, which is when the second stages 30 connected to the second winding 12 either connect both the first circuit node 121 and the second circuit node 122 to the first one p of the second nodes p, q, or to the second one q of the second nodes p, q; and (c) the voltage level -Vpq of the negated voltage Vpq, which is when the second stage 30 connected to the first circuit node 121 connects the first circuit node 121 to the second one q of the second nodes p, q and the second stage 30 connected to the second circuit node 122 connects the second circuit node 122 the first one p of the second nodes p, q.

Voltage V12a across the second winding 12a, for example, has the voltage level +Vpq of the voltage Vpq at the second nodes p, q when second stage 30A connects the first circuit node 121a of the second winding 12a to second node p and second stage 30B connects the second circuit node 122a of the second winding 12a to second node q. Furthermore, voltage V12a has the negated voltage level -Vpq of the voltage Vpq when the second stage 30A connects the first circuit node 121a of the second winding 12a to second node q and second stage 30B connects the second circuit node 122a of the second winding 12a to second node p. The voltage V12a across the second winding 12a is zero when both the first and second circuit nodes 121a, 122a are either connected to second node p or to second node q by the second stages 30A, 30B.

To illustrate the generation of the voltage V12a across the second winding Fig-ure 13 also shows a signal diagram of the voltage V12a across the second winding 12a, the control signal S31A of the first switch 31A in the second stage 30A connected to the first circuit node 121a of the second winding 12a, and the control signal S31B of the first switch 31B in the second stage 30B connected to the second circuit node 122a of the second winding 12a. As can be seen from Figure 13, (a) the voltage V12a across the second winding 12a has the voltage level +Vpq of the voltage Vpq when, in the second stage 30A, the first switch 31A is in the on-state and the second switch 32A is in the off-state and, in the second stage 30B, the first switch 31B is in the off-state and the second switch 32B is in the on-state, so that the first circuit node 121a is connected to second node p and the second circuit node 122a is connected to second node q; (b) the voltage V12a across the second winding 12a has the voltage level -Vpq of the voltage Vpq when, in the second stage 30A, the first switch 31A is in the off-state and the second switch 32A is in the off-state, and, in the second stage 30B, the first switch 31B is in the on-state and the second switch 32B is in the off-state, so that the first circuit node 121a is connected to second node q and the second circuit node 122b is connected to second node p p; and (c) the voltage V12a across the second winding 12a is zero when, in the first and second stages 30A, 30B, either the first switches 31A, 31B are in the on-state and the second switches 32A, 32B are in the off-state, so that the first and second circuit nodes 121a, 122a are connected to second node p, or the first switches 31A, 31B are in the off-state and the second switches 32A, 32B are in the on-state, so that the first and second circuit nodes 121a, 122a are connected to second node q.

In addition to the voltages V11a, V12a across the first and second windings 11a, 12a of transformer 1a and the corresponding control signals, Figure 13 also illustrates examples of signal diagrams of the voltages V12b, V12c across the second windings of transformers 1b, 1c and the corresponding control signals. The voltage V12b across the second winding 12b is generated by second stages 30B, 30C, and the voltage V12c across the second winding 12c is generated by second stages 30C, 30D.

In the power converter, the power transfer from the first side to the second side, or vice versa, is adjusted by suitably adjusting the voltages V12 across the second windings 12. More specifically, the power transfer is adjusted by suitably adjusting the integral of the magnitude |V12| of the voltage V12 across the individual second windings 12 over the duration of each drive cycle. The integral of the magnitude |V12| of the voltage V12 across each second winding 12 over one drive cycle may also be referred to "voltage-time-area". Referring to the above, the voltage level of the voltage V12 across each second winding 12 is either +Vpq or -Vpq, so that the voltage-time-area is given by the magnitude |Vpq| of the voltage Vpq at the second nodes p, q multiplied with the time duration for which the voltage V12 across the second winding 12 is different from zero.

According to one example, in the steady state of the power converter, the voltage-time-areas of the voltages across the second windings 12 are adjusted to be substantially equal to corresponding voltage-time-areas across the first windings 11. The voltage-time-area occurring over a first winding 11 over one drive cycle is given by the magnitude of the voltage received at the first node a, b, c coupled to the respective first winding 11 multiplied with the duration T of one drive cycle. Thus, in order to achieve the same voltage-time-areas across the first and second windings 11, 12 of each of the transformers 1, the following applies: $\frac{\left|Va\right|}{2} ⋅ T = \left|Vpq\right| ⋅ \left|dut_a\right| ⋅ T = > \left|Va\right| = 2 ⋅ \left|Vpq\right| ⋅ \left|dut_a\right|$ (1a) $\frac{\left|Vb\right|}{2} ⋅ T = \left|Vpq\right| ⋅ \left|dut_b\right| ⋅ T = > \left|Vb\right| = 2 ⋅ \left|Vpq\right| ⋅ \left|dut_b\right|$ (1b) $\frac{\left|Vc\right|}{2} ⋅ T = \left|Vpq\right| ⋅ \left|dut_c\right| ⋅ T = > \left|Vc\right| = 2 ⋅ \left|Vpq\right| ⋅ \left|dut_c\right|$ (1c),
where dut_a, dut_b, dut_c denote voltage duty cycles of the voltages V12a, V12b, V12c across the second windings 12a, 12b, 12c. As explained in the following, these duty cycles dut_a, dut_b, dut_c can be positive or negative. The magnitudes of these voltage duty cycles dut_a, dut_b, dut_c define the time durations for which the respective voltage V12a, V12b, V12c is different from zero in the respective drive cycle. This is also illustrated in Figure 13.

The voltage-duty-cycle dut (wherein dut denotes an arbitrary one or the plurality of the voltage duty cycles dut_a, dut_b, dut_c) of the voltage V12 across one second winding 12 can be adjusted by suitably adjusting mutual phase shifts of the control signals of the second stages 30 controlling the respective voltage V12. This is explained with reference to Figure 13 in the following.

For the purpose of explanation it is assumed that a phase shift phi_D of the first control signal S31D (and S32D, not illustrated) of the second stage 30D is zero and that phase shifts phi_A, phi_B, phi_C of the first control signals S31A, S31B, S31C of the other second stages 30A, 30B, 30C are referenced to the first control signals S31D, S32D of second stage 30D. Basically, as can be seen from Figure 13, the duration for which the voltage V12 across the second winding 12 of one transformer 1 is different from zero in each half-cycle is dependent on the difference between the phase shifts of the control signals of the two second stages 30 that adjust the respective voltage V12. More specifically, $\frac{\left|dut_a\right|}{2} ⋅ T = \left|phi_A-phi_B\right| ⋅ T = > \frac{\left|dut_a\right|}{2} = \left|phi_A-phi_B\right|$ (2a) $\frac{\left|dut_b\right|}{2} ⋅ T = \left|phi_B-phi_C\right| ⋅ T = > \frac{\left|dut_b\right|}{2} = \left|phi_B-phi_C\right|$ (2b) $\frac{\left|dut_c\right|}{2} ⋅ T = \left|phi_C-phi_D\right| ⋅ T = > \frac{\left|dut_c\right|}{2} = \left|phi_C-phi_D\right|$ (2c), where $\frac{\left|dut_a\right|}{2} ⋅ T$ denotes the time period in each half-cycle in which voltage V12a is different from zero, $\frac{\left|dut_b\right|}{2} ⋅ T$ denotes the time period in each half-cycle in which voltage V12b is different from zero, and $\frac{\left|dut_c\right|}{2} ⋅ T$ denotes the time period in each half-cycle in which voltage V12c is different from zero.

Referring to the above, the first and second stages 20, 30 are controlled by the control circuit 4 in order to control operation of the power converter. The functionality of the power converter in order to operate the power converter in accordance with the signal diagrams illustrated in Figure 13 is explained in the following. More specifically, different functional blocks of the control circuit 4 are explained. It should be noted that the block diagrams explained in the following illustrate functional blocks of the control circuit 4 rather than a specific implementation. Those functional blocks can be implemented in various ways. According to one example, these functional blocks are implemented using dedicated circuitry. According to another example, the control circuit 4 is implemented using hardware and software. For example, the control circuit 4 includes a microcontroller and software executed by the microcontroller.

Hereinafter, the term "measured voltage" refers to a voltage measurement value obtained by measuring a respective voltage using a voltage sensor, and the term "measured current" refers to a current measurement value obtained by using a current sensors. Conventional voltage and current sensors can be used to obtain the measured voltages and measured current. Such voltage and current measurement sensors are not illustrated.

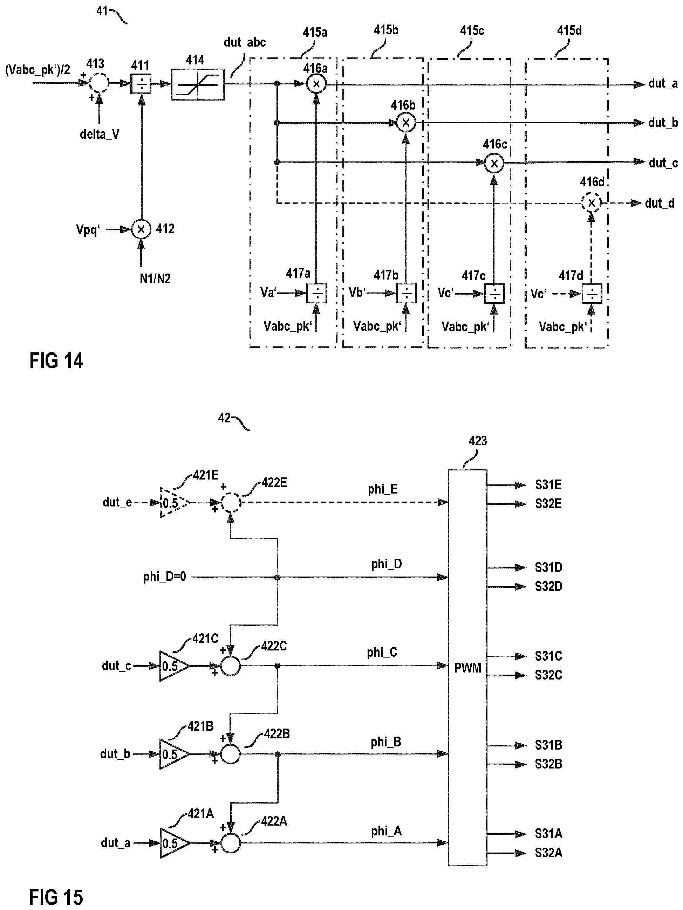

According to one example illustrated in Figure 14, the control circuit 4 includes a voltage duty cycle controller 41 which is configured to provide the voltage duty cycles dut_a, dut_b, dut_c to be applied to the individual second windings 12a, 12b, 12c. The voltage duty cycle controller 41 is configured to generate an overall voltage duty cycle dut_abc based on a relationship between a peak voltage Vabc_pk of the voltages Va, Vb, Vc at the first nodes a, b, c and a voltage level of the voltage at the second nodes Upq and is configured to provide the voltage duty cycles dut_a, dut_b, dut_c based on the overall voltage duty cycle dut_abc and instantaneous voltage levels of the voltages Va, Vb, Vc at the first nodes a, b, c.

More specifically, in the example illustrated in Figure 14, the voltage duty cycle controller 41 calculates the overall voltage duty cycle dut_abc in accordance with $dut _ abc = \frac{Vabc _ pk ′}{2 ⋅ Upq ′ ⋅ \frac{N 1}{N 2}}$ (3), where Vabc_pk'/2 denotes 50% of the measured peak voltage, Upq' denotes the measured voltage at the second nodes p, q, and N1/N2 denotes the winding ratio between the number N1 of turns of the first windings 11 and the number of turns N2 of the second windings 12 of the transformers 1. $Upq ′ ⋅ \frac{N 1}{N 2}$ is a weighted voltage measurement value which takes into account the transfer ratio of the transformers 1. The peak voltage Vabc_pk' may be measured or obtained in a conventional way, which may include using a peak detector, a phase locked loop (PLL), or the like.

As illustrated in Figure 14, the overall duty cycle dut_abc may provided by a divider 440 that receives the measured peak voltage Vabc_pk' and that receives the weighted voltage measurement value from a multiplier 412 providing the weighted voltage measurement value. Optionally, an offset delta_V is added to the measured peak voltage Vabc_pk'. The offset, which is selected from a range of between -20% and 20% of the peak voltage Vabc_pk, for example, may help to increase the efficiency of the power converter.

Referring to Figure 14, the voltage duty cycle generator 41 further includes several branches 415a, 415b, 415c that each receive the overall duty cycle dut_abc and generate a respective one of the voltage duty cycles dut_a, dut_b, dut_c. Each of these voltage duty cycles dut_a, dut_b, dut_c is a weighted version of the overall duty cycle dut_abc, wherein a weighting factor is dependent on the instantaneous voltage level of the voltage Va, Vb, Vc received at the respective first input node a, b, c. According to one example, the weighting factors are dependent on a ratio between the instantaneous voltage levels of the voltages Va, Vb, Vc received at the first nodes a, b, c and the peak voltages Vabc_pk of these voltages Va, Vb, Vc. More specifically, in the example illustrated in Figure 14, the voltage duty cycles dut_a, dut_b, dut_c are provided in accordance with, $dut _ a = dut _ abc ⋅ \frac{Va ′}{Vabc _ pk ′}$ (4a) $dut _ b = dut _ abc ⋅ \frac{Vb ′}{Vabc _ pk ′}$ (4b) $dut _ c = dut _ abc ⋅ \frac{Vc ′}{Vabc _ pk ′}$ (4c), where Va', Vb', Vc' denote the measured voltages at the first nodes a, b, c. In the example illustrated in Figure 14, the voltage duty cycles dut_a, dut_b, dut_c are provided by multipliers 416a, 416b, 416c that receive the overall duty cycle dut_abc and that receive the ratios between the measured voltages Va', Vb', Vc' and the measured peak voltage Vabc_pk' from dividers 417a, 417b, 417c.

Optionally, the voltage duty cycle generator 41 includes a limiter 440 that is configured to limit the overall duty cycle dut_abc to values between 0 and 1. In the example illustrated, the overall duty cycle dut_abc is positive. The voltage duty cycles dut_a, dut_b, dut_c can be positive or negative dependent on whether the instantaneous voltage level of the measured voltage Va', Vb', Vc' is positive or negative.

Referring to Figure 15, the control circuit 4 further includes a first control signal (drive signal) generator 42 that is configured to receive the voltage duty cycles dut_a, dut_b, dut_c and provide the drive signals S31, S32 for driving the first and second switches 31, 32 in the second stages 30. The drive signal generator 42 is configured to provide the phase shifts phi (where phi denotes an arbitrary one or the plurality of the phase shifts phi_A, phi_B, phi_C, phi_D) based on the voltage duty cycles dut and generate the drive signals S31, S32 based on the phase shifts phi.

In the example illustrated in Figure 15, the first control signal generator 42 includes weighting elements 421A, 421B, 421C and adders 422A, 422B, 422C that calculate the phase shifts phi_A, phi_B, phi_C in accordance with $phi _ C = phi _ D + 0.5 ⋅ dut _ c$ (5a) $phi _ B = phi _ C + 0.5 ⋅ dut _ b$ (5b) $phi _ A = phi _ B + 0.5 ⋅ dut _ a$ (5c), where phi_D, in accordance with the example explained hereinabove, is 0.

Calculating the phase shifts phi in accordance with equations (5a), (5b), (5c), however, is only an example. According to another example, the phase shifts are calculated in accordance with $phi _ C = 0.5 ⋅ dut _ c$ (6a) $phi _ B = 0.5 ⋅ \left(dut_b+dut_c\right)$ (6b) $phi _ A = 0.5 ⋅ \left(dut_a+dut_b+dut_c\right)$ (6c) $phi _ D = 0$ (6d).

In each case, one of the phase shifts (such as phase shift phi_D) is zero, acting as a reference, and the other phase shifts are calculated dependent on either at least one of the voltage duty cycles dut and one of the phase shifts or dependent on one or more of the voltage duty cycles dut.

Referring to Figure 15, the control signal generator further includes a PWM generator 423 that is configured to receive the phase shifts phi and provide the control signals S31, S32 with a 50% duty cycle and the respective phase shift phi.

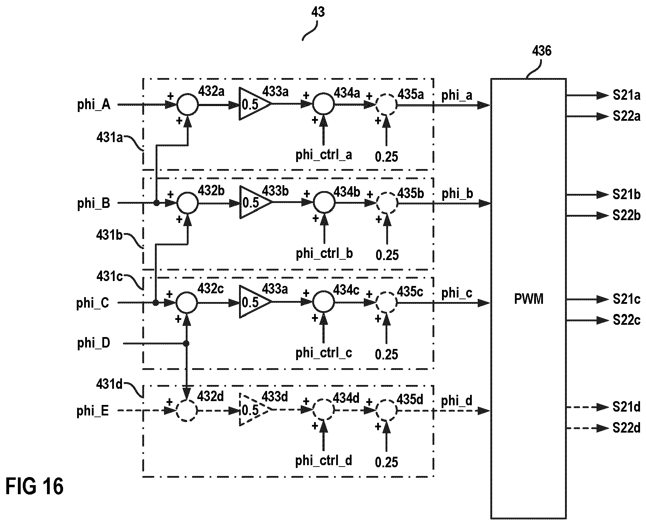

Referring to Figure 16, the control circuit further includes a second control signal generator 43 that is configured to provide the control signals S21, S22 to the first stages 21, 22 on the first side of the power converter. The second control signal generator 43 is configured to calculate phase shifts phi_a, phi_b, phi_c, wherein each of these phase shifts phi_a, phi_b, phi_c indicates a phase shift of the control signals S21, S22 of a respective one of the first stages 10 relative to a phase shift reference. According to one example, the phase shift reference of the control signals S21, S22 of the first stages 10 is the same phase shift reference used for generating the control signals S31, S30 of the second stages 30, such as phi_D=0 explained above.

As explained above, each of the first stages 20 is connected to a first winding 11 of a respective transformer 10, and two second stages 30 are connected to the second winding 12 of the respective transformer 10. Thus, each of the transformers 10 has one first stage 20 and two second stages 30 connected thereto. According to one example, the phase shift of the control signals S21, S22 of the first stage 20 connected to a respective transformer 10 is dependent on the phase shifts of the control signal S31, S32 of the two second stages connected to the respective transformer 10. Thus, for example, the phase shift phi_a of the control signals S21a, S22a controlling first stage 20a connected to the first winding 11a of transformer 10a is dependent on the phase shifts of the control signals S31A, S32A, S31B, S32B controlling second stages 30A, 30B connected to the second winding 12a of the same transformer 10a.

According to one example, the phase shift of the control signal S21, S22 of each of the first stages 20 is dependent on the average value of the phase shifts of the control signals S31, S32 of the two second stages 30. Thus, for example, the phase shift phi_a of the control signals S21a, S22a controlling first stage 20a connected to transformer 10a is dependent on $\frac{\left(phi_A+phi_B\right)}{2}$, where phi_A is the phase shift associated with second stage 30A, and phi_B is the phase shift associated with second stage 30B.

Additionally, each of the phase shifts phi_a, phi_b, phi_c associated with a respective first stage 20a, 20b, 20c is dependent on a power control phase shift phi_ctrl_a, phi_ctrl_b, phi_ctrl_c, which is configured to control a power at the respective first node a, b, c. In the example illustrated in Figure 16, the second control signal generator 43 is configured to calculate the individual first side phase shifts phi_a, phi_b, phi_c in accordance with $phi _ a = \frac{\left(phi_A+phi_B\right)}{2} + phi _ ctrl _ a + 0.25$ (7a) $phi _ b = \frac{\left(phi_B+phi_C\right)}{2} + phi _ ctrl _ b + 0.25$ (7b) $phi _ c = \frac{\left(phi_C+phi_D\right)}{2} + phi _ ctrl _ c + 0.25$ (7c).

The offset of 0.25 is optional and is dependent on how the phase shifts of the control signals S31, S32 of the second stages 30 connected to the same transformer 1 are taken into account in the phase shifts phi_a, phi_b, phi_c associated with the first stages 20a, 20b, 20c.

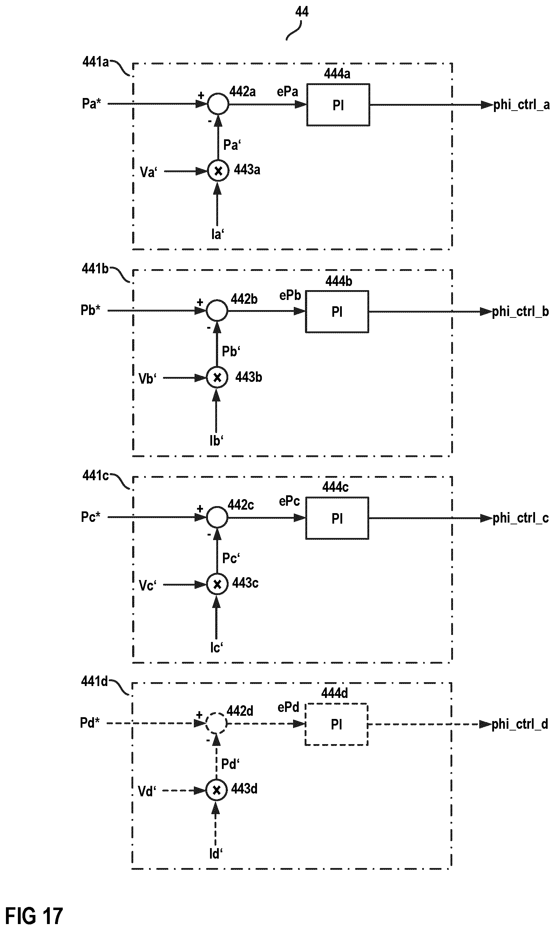

Referring to Figure 17, for generating the power control phase shifts phi_ctrl_a, phi_ctrl_b, phi_ctrl_c the control circuit 4 includes a power controller 44. The power controller 44 includes several branches 441a, 441b, 441c, wherein each of these branches is configured to provide a respective one of the power control phase shifts phi_ctrl_a, phi_ctrl_b, phi_ctrl_c. Each of the power control phase shifts phi_ctrl_a, phi_ctrl_b, phi_ctrl_c is dependent on a power reference Pa*, Pb*, Pc* and a measured power Pa', Pb', Pc'. The power reference Pa*, Pb*, Pc* is a desired power to be received at (in the first operating mode) or to be provided to (in the second operating mode) the respective first node a, b, c. The measured power Pa', Pb', Pc' represents the power that is instantaneously received at or provided to the respective first node a, b, c and is given by a measured voltage Va', Vb', Vc' multiplied with a measured current Ia', Ib', Ic' at the respective first node a, b, c. In the example illustrated in Figure 17, each of the branches 441a, 441b, 441c includes a multiplier 443a, 443b, 443c that receives the respective measured voltage Va', Vb', Vc and the respective measured current Ia', Ib', Ic' and provides the respective measured power Pa', Pb', Pc'.

More specifically, in the example illustrated in Figure 17, the power controller 44 generates the power control phase shifts phi_ctrl_a, phi_ctrl_b, phi_ctrl_c dependent on a difference (an error) ePA, ePb, ePc between the power reference Pa*, Pb*, Pc* and the measured power Pa', Pb', Pc'. The difference (or error signal) is provided by a subtractor 442a, 442b, 442c that receives the power reference Pa*, Pb*, Pc* and the measured power Pa', Pb', Pc'. A controller 444a, 444b, 444c, such as a PI controller receives the error signal ePA, ePb, ePc and provides the respective power control phase shift phi_ctrl_a, phi_ctrl_b, phi_ctrl_c.

The phase shift phi_a associated with first converter stage 20a is illustrated in Figure 13.

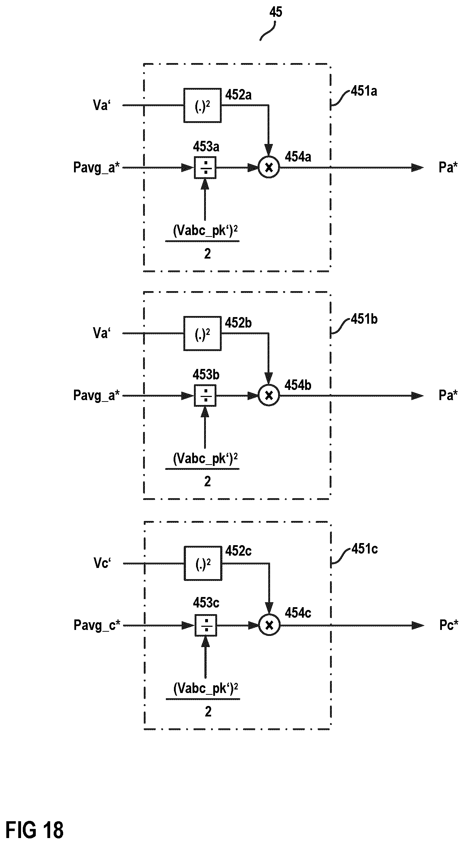

The power references Pa*, Pb*, Pc* denote the instantaneous desired powers at the respective first nodes a, b, c. These instantaneous desired powers may vary over the periods of the voltages Va, Vb, Vc at the first notes a, b, c in order to achieve a PFC functionality, for example. One example for generating the power references Pa*, Pb*, Pc* is illustrated in Figure 18.

Figure 18 illustrates one example of a power reference controller 45 that is configured to provide the power references Pa*, Pb*, Pc*. In this example, the power reference controller 45 generates each of the power references Pa*, Pb*, Pc*dependent on an average power reference Pavg_a*, Pavg_b*, Pavg_c*. The desired average power reference Pavg_a*, Pavg_b*, Pavg_c*. is the desired average power to be received at or provided to the respective first node a, b, c. If, for example, the load connected to the second nodes p, q is a battery that is to be charged with a desired average power, then each of the average power references Pavg_a*, Pavg_b*, Pavg_c* is 1/3 (33.3%) of the power to be provided to the battery. Furthermore, each of the power references Pa*, Pb*, Pc* is dependent on the measured voltage Va', Vb', Vc' at the respective first node a, b, c. According to one example, the power reference controller 45 generates the power references Pa*, Pb*, Pc* in accordance with $Pa * = \frac{Pavg _ a *}{{\left(Vabc_pk′\right)}^{2} / 2} ⋅ {\left(Va′\right)}^{2}$ (8a) $Pb * = \frac{Pavg _ b *}{{\left(Vabc_pk′\right)}^{2} / 2} ⋅ {\left(Vb′\right)}^{2}$ (8b) $Pc * = \frac{Pavg _ c *}{{\left(Vabc_pk′\right)}^{2} / 2} ⋅ {\left(Vc′\right)}^{2}$ (8c).

As mentioned above, the method for generating the control signals explained herein before relates to generating the control signals of the first stages 20a, 20b, 20c connected to the first nodes a, b, c and connected to transformers 1a, 1b, 1c and to generating the control signals of the second stages 30A, 30B, 30C, 30D connected to the same transformers 1a, 1b, 1c. This method and the control circuit 4 can easily be extended to generating the control signals of the at least one additional first stage 10d and the corresponding additional second stage 30E. Functional blocks required for generating the control signals S21d, S22d for controlling the additional firts stage 10d and the control signals S31E, S32E for controlling the additional second stage 30D are illustrated in dashed lines in Figures 14-17.

Referring to Figure 15, the phase shift phi_E assiciated with the control signals S31E, S32E of the additional second stage 30E may be calculated in accordance with$phi _ E = phi _ D + 0.5 ⋅ dut _ e$ by a weighting element 421E and an adder 422E. The PWM modulator 423 receives the phase shift phi_E and generates the control signals S31E, S32E.

Referring to Figure 16, the phase shift phi_d associated with the additional first stage 10d may be calculated by a respective branch 432d of the second control signal generator 43 in accordance with $phi _ d = \frac{\left(phi_D+phi_E\right)}{2} + phi _ ctrl _ d + 0.25$ (7d) using respective adders 432d, 434d, 435d and a weighting element 433d.

Furthermore, referring to Figure 17, the power controls phase shift phi_ctrl_d associated with the additional first stage 10d may be calculated by the power controller 44 dependent on a corresponding error signal ePd using a controller such as a PI controller 444d. The error signal ePd is given by $ePd = Pd * - Pd ′$ (9), where Pd* denotes the power reference at the third node and Pd' denotes the measured power at the set node. The power reference Pd* is the instantaneous desired power to be received or to be provided to the third node d in order to supply a load configured to be connected to the third node d.

Referring to the above, power may be received from the first nodes a, b, c or may be provided to the first nodes a, b, c, so that the power references Pa*, Pb*, Pc* associated with power at the first nodes a, b, c may have a polarity (positive or negative) that is dependent on the respective operating mode. According to one example, the third node is only used to provide power to a load. Thus, the power reference Pd* associated with power Pd provided to the third node d may have a polarity opposite the polarities of the power references Pa*, Pb*, Pc* when the power converter is in the first operating mode in which power is received at the first nodes a, b, c.

Some of the examples explained before are briefly summarized in the following with reference to numbered examples.

Example 1. A power converter, including: three first nodes, two second nodes, and one or more third nodes; a first number of four or more transformers each including a first winding and a second winding inductively coupled with the first winding; a first circuit including the first number of first stages each having a first circuit node and a second circuit node, the first circuit node of each first stage connected to a first circuit node of the first winding of a respective one of the transformers; and a second circuit with a second number of second stages each including a switched node and each coupled to the second nodes, wherein the second number is one more than the first number, wherein the second windings are connected in series, wherein the second stages are connected to the second windings such that each second winding is connected between the switched nodes of a respective pair of the second stages, wherein the first stages include a first group with three first stages and a second group with one or more first stages, wherein the second circuit node of each of the first stages of the first group is connected to one of the first nodes, and wherein the second circuit node of each of the one or more first stages of the second group is connected to a respective one of the one or more third nodes.

Example 2. The power converter of example 1, wherein each of the first stages further includes a third circuit node, wherein the third circuit node of each of the first stages of the first group is connected to a common circuit node, and wherein second circuit nodes of the first windings connected to the first stages of the first group are connected to each other, thereby forming a star point.

Example 3. The power converter of example 2, wherein the common circuit node is connected to the star point.

Example 4. The power converter of example 2 or 3, wherein the third circuit node of each of the first stages of the second group is connected to a second circuit node of the first winding connected to the first stage.

Example 5. The power converter of example 4, wherein each of the first stages of the second group has its third circuit node either connected to the common circuit node, or isolated from the common circuit node.

Example 6. The power converter of any one of examples 1 to 5, wherein the first nodes are configured to receive power from or output power to a three-phase power grid having a reference node.

Example 7. The power converter of example 6, wherein the common circuit node is configured to be connected to the reference node.

Example 8. The power converter of any one of examples 1 to 7, wherein each of the one or more third nodes is configured to be coupled to a respective load.

Example 9. The power converter of any one of examples 1 to 8, wherein each of the first stages includes a switch half-bridge with a first switch and a second switch, wherein the first switch and the second switch are connected at a switched node and are connected in series between the second circuit node and the third circuit node of the first stage, wherein the switched node is coupled to the first circuit node of the first stage.

Example 10. The power converter of example 9, wherein, in each of the first stages, the switched node is coupled to the first circuit node via a first capacitor.

Example 11. The power converter of example 9 or 10, wherein each of the first stages further includes a second capacitor connected between the second and third circuit nodes of the first stage.

Example 12. The power converter of any one of examples 9 to 11, wherein each of the first and second switches of the first stage is a bidirectionally blocking electronic switch.

Example 13. The power converter of any one of examples 1 to 12, wherein each of the second stages further includes a first switch and a second switch connected with each other at the switched node and connected in series between the second nodes of the power converter.

Example 14. The power converter of example 13, wherein each of the first and second switches of the second stage is a unidirectionally blocking electronic switch.

Example 15. The power converter of any one of examples 1 to 14, further including: a control circuit configured to operate each of the first stages and the second stages at a fixed switching frequency and a fixed duty cycle.

Example 16. The power converter of example 12, wherein the duty cycle is selected from between 49% and 50%.

Example 17. A method for operating a power converter, wherein the power converter is in accordance with any one of examples 1 to 15, and wherein the method includes operating each of the first stages and the second stages at a fixed switching frequency and a fixed duty cycle.

Example 18. The method of example 17, wherein the duty cycle is selected from between 49% and 50%.

Example 19. The method of any one of examples 17 and 18, further including: for the second winding of each transformer, calculating a voltage duty cycle dependent on a peak voltage of voltages received at the first nodes, a voltage at the second nodes, and an instantaneous voltage level of a voltage at the first or third node coupled to the first winding of the respective transformer; and adjusting phase shifts of control signals of the second stages dependent on the voltage duty cycles.

Example 20. The method of example 19, further including, for each of the first stages: calculating a power control phase shift dependent on a instantaneous power reference; and adjusting a phase shift of control signals of the respective first stage dependent on the power control duty cycle and the phase shifts of the control signals of the second stages connected to the same transformer as the first stage.

Example 21. A control circuit configured to operate a power converter, wherein the power converter is in accordance with any one of examples 1 to 15, and wherein the control circuit is configured to operate each of the first stages and the second stages at a fixed switching frequency and a fixed duty cycle.

## Claims

1. A power converter, comprising:
three first nodes (a, b, c), two second nodes (p, q), and one or more third nodes (d, e);
a first number of four or more transformers (1a-e) each comprising a first winding (11a-e) and a second winding (12a-e) inductively coupled with the first winding (11a-e);
a first circuit (2) comprising the first number of first stages (20a-e) each having a first circuit node (25a-e) and a second circuit node (26a-e), the first circuit node (25a-e) of each first stage (20a-e) connected to a first circuit node (1 1 1a-e) of the first winding (1 1a-e) of a respective one of the transformers (1a-e); and
a second circuit (3) with a second number of second stages (30A-F) each comprising a switched node (33A-F) and each coupled to the second nodes (p, q),
wherein the second number is one more than the first number,
wherein the second windings (12a-e) are connected in series,
wherein the second stages (30A-F) are connected to the second windings (12a-e) such that each second winding (12a-e) is connected between the switched nodes (33A-F) of a pair of the second stages (30A-F),
wherein the first stages (20a-e) comprise a first group with three first stages (20a-c) and a second group with one or more first stages (20d-e),
wherein the second circuit node (26a-c) of each of the first stages (20a-c) of the first group is connected to one of the first nodes (a, b, c), and
wherein the second circuit node (26d-e) of each of the one or more first stages (20a-e) of the second group is connected to one of the one or more third nodes (d, e).

2. The power converter of claim 1,
wherein each of the first stages (20a-e) further comprises a third circuit node (27a-e),
wherein the third circuit node (27a-c) of each of the first stages (20a-c) of the first group is connected to a common circuit node (o), and
wherein second circuit nodes (112a-c) of the first windings (1 1a-c) connected to the first stages (20a-c) of the first group are connected to each other, thereby forming a star point.

3. The power converter of claim 2,
wherein the common circuit node (o) is connected to the star point.

4. The power converter of claim 2 or 3,
wherein the third circuit node (27d-e) of each of the first stages (20d-e) of the second group is connected to a second circuit node (112d-e) of the first winding (11d-e) connected to the first stage (21d-e).

5. The power converter of any one of claims 1 to 4,
wherein the first nodes (a, b, c) are configured to receive power from or output power to a three-phase power grid having a reference node (n).

6. The power converter of any one of claims 1 to 5,
wherein each of the one or more third nodes (d, e) is configured to provide power to a load.

7. The power converter of any one of claims 1 to 6,
wherein each of the first stages (20a-e) comprises a switch half-bridge with a first switch (21a-e) and a second switch (22a-e),
wherein the first switch (21a-e) and the second switch (22a-e) are connected at a switched node (23a) and are connected in series between the second circuit node (26a-e) and the third circuit node (27a-e) of the first stage (20a-e),
wherein the switched node (23a-e) is coupled to the first circuit node (25a-e) of the first stage (20a-e).

8. The power converter of any one of claims 1 to 7,
wherein each of the second stages (30A-E) further comprises a first switch (31A-F) and a second switch (32A-F) connected with each other at the switched node (33A-F) and connected in series between the second nodes (p, q) of the power converter.

9. The power converter of any one of claims 1 to 8, further comprising:
a control circuit (4) configured to operate each of the first stages (20a-e) and the second stages (30A-F) at a fixed switching frequency and a fixed duty cycle.

10. The power converter of claim 9,
wherein the duty cycle is selected from between 49% and 50%.

11. A method for operating a power converter,
wherein the power converter is in accordance with any one of claims 1 to 8, and
wherein the method comprises operating each of the first stages (20a-e) and the second stages (30A-F) at a fixed switching frequency and a fixed duty cycle.

12. The method of claim 11,
wherein the duty cycle is selected from between 49% and 50%.

13. The method of claim 11 or 12, further comprising:
for the second winding (12a-d) of each transformer (1a-d), calculating a voltage duty cycle (dut_a-d) dependent on a peak voltage (Vabc_pk) of voltages (Va, Vb, Vc) received at the first nodes (a, b, c), a voltage (Vpq) at the second nodes (p, q), and an instantaneous voltage level (Va'-d') of a voltage at the first or third node (a, b, c, d) coupled to the first winding (1 1a-d) of the respective transformer (1a-d); and
adjusting phase shifts (phi_A-E) of control signals (S31A-E, S32A-E) of the second stages (30A-E) dependent on the voltage duty cycles (dut_a-d).

14. The method of claim 13, further comprising, for each of the first stages (20a-d):
calculating a power control phase shift (phi_ctrl_a-d) dependent on a instantaneous power reference (Pa*, Pb*, Pc*, Pd*); and
adjusting a phase shift of control signals (S21a-d, S22a-d) of the respective first stage (20a-d) dependent on the power control duty cycle (phi_ctrl_a-d) and the phase shifts (phi_A-E) of the control signals (S31A-E, S32A-E) of the second stages (30A-30E) connected to the same transformer (1a-d) as the first stage (20a-d).

15. A control circuit configured to operate a power converter,
wherein the power converter is in accordance with any one of claims 1 to 8, and
wherein the control circuit is configured to operate each of the first stages (20a-e) and the second stages (30A-F) at a fixed switching frequency and a fixed duty cycle.
